Europäisches Patentamt

European Patent Office

Office européen des brevets

(19)

(11) Publication number: **0 256 145**

**A1**

## (12) EUROPEAN PATENT APPLICATION

(21) Application number: **86111092.2**

(22) Date of filing: **11.08.86**

(51) Int. Cl.⁴: **B21C 37/08**

(43) Date of publication of application:
**24.02.88 Bulletin 88/08**

(84) Designated Contracting States:
**BE DE FR GB NL SE**

(71) Applicant: **ADDISON MACHINE ENGINEERING, INC.**
**424 Interstate Road**
**Addison Illinois(US)**

(72) Inventor: **Dempsey, William J.**
**817 South Hammerschmidt**
**Lombard Illinois(US)**
Inventor: **Brunken, Walter R.**
**5N784 Acacia Lane**
**Medinah Illinois(US)**
Inventor: **Mailhiot, Alfred F., Jr.**
**4420 West 177th Place**
**Country Club Hill Illinois(US)**

(74) Representative: **Patentanwälte Müller-Boré, Deufel, Schön, Hertel, Lewald, Otto**
**Postfach 26 02 47 Isartorplatz 6**
**D-8000 München 26(DE)**

(54) **Apparatus for removing burrs from welded material.**

(57) A scarfing apparatus (26) for removing a weld bead from a tube (60) being produced by a continuous method, wherein the tube enters one end of a hollow spindle (34) which rotatably supports a scarfing tool holder (28) on which is mounted a tool bit (30). The tool bit has an arcuate shape having a segment which extends 180° or less about the periphery of the tube. The other end of the spindle is provided with a sensing device (32) which, in conjunction with a power unit (68) and control means, applies oscillatory rotational movement to the spindle to thereby cause the tool bit to rock back and forth across the surface of the moving tube to remove the weld bead. The tool holder is provided with an undercut section (35) adapted to receive securing means for mounting the tool bit in a manner to facilitate rapid removal thereof for installing a new tool bit without ceasing the operation of the continuous tube-forming apparatus.

## APPARATUS FOR REMOVING BURRS FROM WELDED MATERIAL

### BACKGROUND OF THE INVENTION

#### Field of the Invention

This invention is generally directed to the removal of a weld bead from the outside surface of a tube by means of scarfing and, more specifically, to an apparatus for removing a weld bead from a tube being produced by a continuous method.

#### Description of the Prior Art

Various methods and apparatus are known for removing weld beads from tubes. For example, U.S. Patent No. 1,973,877 describes an apparatus using a pair of rotary shears which cooperatively removes the weld bead from a tube as the tube passes in a scarfing contact with the shears. One disadvantage of this apparatus is in the use of two shears which wear out unevenly and have to be replaced quite often.

Another form of removing a weld bead is described in U.S. Patent 3,755,884 which uses a stationary scarfing tool which is positioned in a scarfing contact with a moving tube as it is being formed on a tube-forming machine. Since the scarfing tool removes the weld bead by a brute force, the formed tube is subject to deformation. Furthermore, the scarfing tool wears out fairly rapidly and requires frequent replacement.

A better apparatus for removing weld beads is described in U.S. Patent No. 1,954,511 wherein in the embodiment shown in Figs. 5 and 6, a ring-shaped cutter, rotatably mounted, removes the weld bead from a tube as it passes through the center of the cutter. The main objection to this type of cutter is that, should the cutter perform improperly and has to be removed, it is necessary to shut down the tube-forming apparatus so that the ring cutter can be replaced.

### SUMMARY OF THE INVENTION

Since it has been found that a malfunction in a ring-shaped cutter requires the shut down of the tube-forming apparatus in accordance with the present invention, there is provided a scarfing apparatus employing a rotatably supported scarfing cutter which can be readily replaced without stopping the operation of the apparatus continuously forming a tube.

It is the principal object of this invention to provide an apparatus for scarfing the weld bead from the outside surface of a welded tube without deforming the tube under the action of the scarfing tool.

It is another object of this invention to provide an apparatus for scarfing the weld bead from a welded tube without requiring cooling of the scarfing tool.

A still further object of the invention is to provide means for oscillatingly supporting a scarfing tool to provide uniform scarfing contact with the tube.

Another object of the invention is to provide means on the scarfing apparatus to support the scarfing tool in a quick-release manner.

A still further object of the invention is to provide an oscillatingly-supported scarfing unit which not only removes the weld bead, but provides polishing to the surface of the tube.

Other objects and advantages will become apparent from the following description and drawings.

### BRIEF DESCRIPTION OF THE DRAWINGS

FIG. 1 is an end view of a scarfing apparatus provided with an oscillatingly-supported scarfing tool;

FIG. 2 is a sectional view of the scarfing apparatus;

FIG. 3 is the opposite end view of the scarfing apparatus; and

FIG. 4 is a circuit schematic adapted for providing oscillating motion to the scarfing tool.

### DESCRIPTION OF THE PREFERRED EMBODIMENT

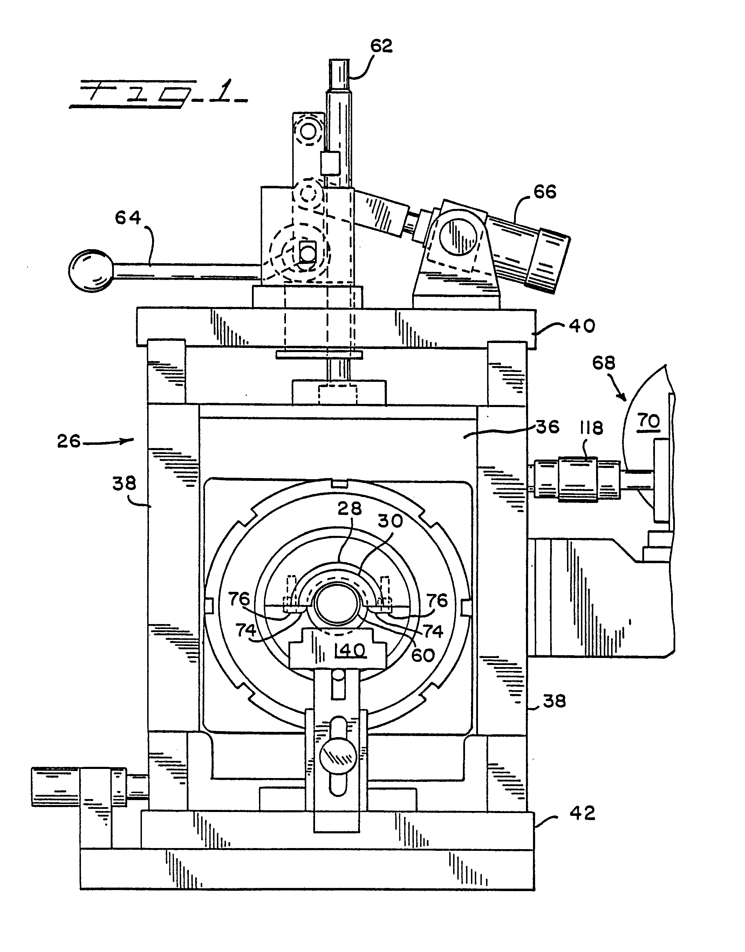

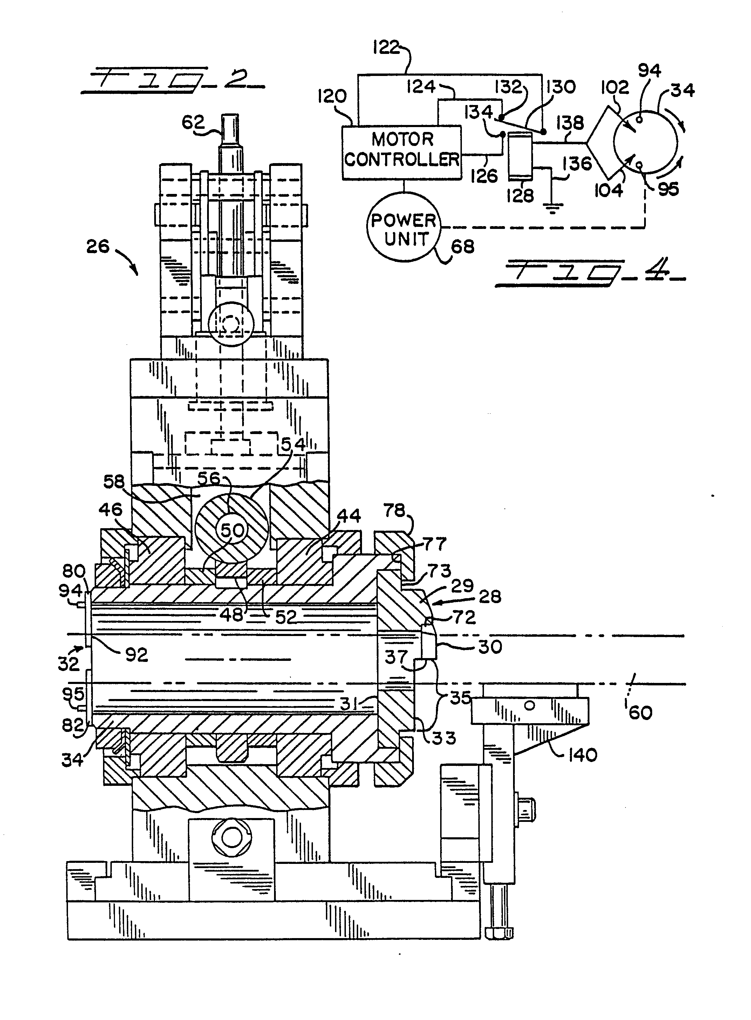

Referring to Figs. 1 through 3, the preferred embodiment of the invention is concerned with a scarfing apparatus 26 which has been modified to use an improved scarfing tool holder 28 supporting an arcuate tool bit 30 which is adapted to remove a weld bead from a continuously formed tube 60 shown in phantom in Fig. 2 entering into the scarfing apparatus 26 and exiting the apparatus adjacent a sensing device 32 which is responsible for controlling the rotary movement of a spindle 34. The mechanical features of the scarfing apparatus 26 will not be discussed in detail inasmuch as the scarfing apparatus is well known, for example, as manufactured by Addison Machine Engineering, Inc. of Addison, Illinois.

The scarfing apparatus 26 comprises a bearing block 36 movably supported in a vertical direction between frame members 38 spaced between a top plate 40 and a bottom plate 42. The bearing block 36 furnishes support for the spindle 34 as shown in Fig. 2, rotatably supported by bearings 44 and 46. The central portion of the spindle 34 on the periphery thereof is provided with a driven worm gear 48 which is spaced from the bearings 44 and 46 by spacers 50 and 52, respectively.

The driven worm gear 48 is actuated by a driving worm gear 54 supported on a shaft 56, the ends of which are supported by blocks, such as block 58.

As shown in Fig. 1, the bearing block 36 supporting the spindle and the associated scarfing tool holder 28 and the arcuate tool bit 30 can be positioned in respect to the tube 60 by means of a threaded member 62 so that a proper scarfing action may be maintained on the tube 60 as it moves through the apparatus 26.

If it is necessary to remove the scarfing tool holder 28 and its associated tool bit 30 away from the tube 60, this can be done by a quick release handle 64, or it can be automatically provided for by an air cylinder 66.

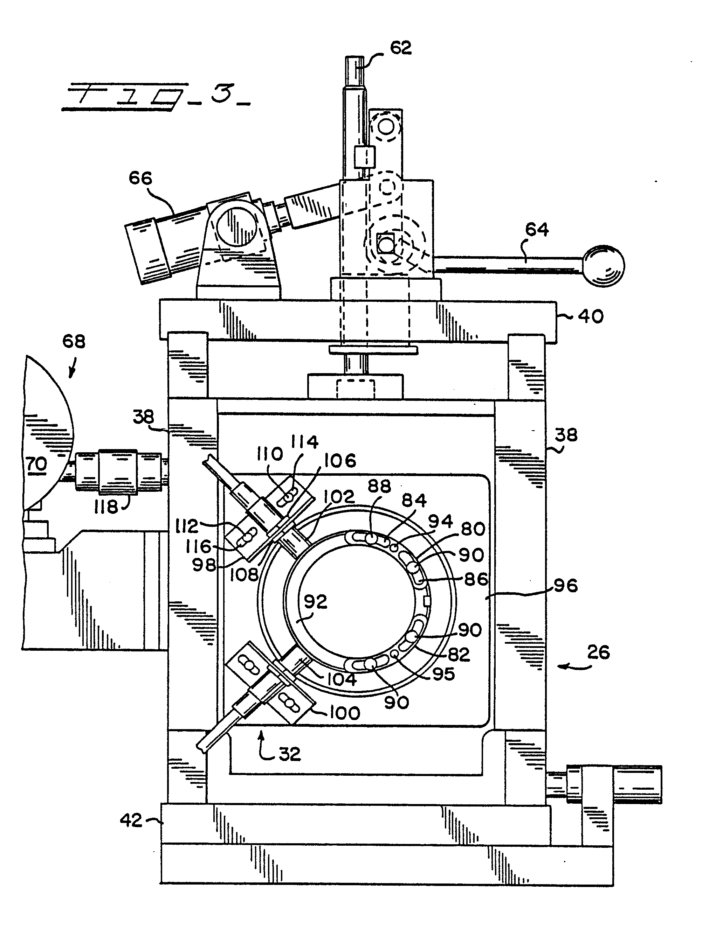

The driving worm gear 54 is actuated by a power unit 68 comprising a D.C. motor and speed reducer 70, as viewed in Fig. 3.

As best viewed in Fig. 1, the scarfing tool holder 28 has substantially a semi-circular shape having a substantially circular-shaped seat 72 (Fig. 2) adapted to receive a substantially semi-circular-shaped tool bit 30 which is secured to the tool holder 28 by a pair of brackets 74 and bolts 76, the bracket-bearing tool bit having supporting lips 75. As best viewed in Fig. 2, the scarfing tool holder 28 is, in turn, supported on the spindle 34 by a tool holder locking nut 78. The tool holder 28 is made from a plate 29 having a distal side 31 secured to an end of the spindle 34 and a frontal side 33 having an undercut portion 35, the remaining portion of said tool holder defining an overhang 37. The frontal side 33 has a peripheral shoulder 73 which is abutted by an interior shoulder 77 of the locking nut 78.

The other end of the spindle 34, as shown in Figs. 2 and 3, supports a pair of actuator brackets 80 and 82. Each actuator bracket, such as actuator bracket 80, has an arcuate shape provided with a pair of arcuate slots 84 and 86 which receive a pair of securing members 88 and 90, respectively, which members secure the actuator bracket 80 to an end 92 of the spindle 34. The arcuate slots 84 and 86 allow the actuator bracket to be adjustably positioned on the spindle end 92. Each actuator bracket, such as actuator bracket 80, is provided with an actuator pin 94 which extends outwardly of the actuator bracket 80, as shown in Fig. 2. The actuator bracket 82 supports a position indicator member, such as an actuator pin 95. These pins establish the range of the oscillatory rotational movement of the spindle, as will be discussed later.

Mounted on a plate 96, as shown in Fig. 3, is a pair of sensor brackets 98 and 100 supporting a pair of the sensors 102 and 104, respectively. The position of the sensors, such as sensor 102, can be adjusted radially with respect to the spindle 34 by adjustable members 106 and 108. The tangential position of each sensor, such as sensor 102, can be obtained by loosening securing members 110 and 112 so that a sliding movement of the sensor bracket 98 can be obtained through its slots 114 and 116. The sensors 102 and 104 are actually commonly known proximity switches, such as type TL-X 5 Y1 manufactured by Omron Company. The sensors 102 and 104 and the actuator brackets 80 and 82 and the associated actuator pins 94 and 95 comprise the sensing device 32. The brackets and the supported sensors are mounted at 90° to each other.

When the power unit 68 is energized, rotary power at a reduced speed is applied by a coupling 118 to the shaft 56 supporting the driving worm gear 54 which, in turn, transmits rotary power to the driven worm gear 48 mounted on the spindle 34 to thereby provide rotational movement to the spindle. The motion transmitted to the spindle 34 is of an oscillating nature, that is, the spindle will rock back and forth, as will now be discussed more fully.

Referring to Fig. 4, there is shown a basic control circuit for controlling the power unit 68 in such manner as to apply partial rotational movement in an oscillating manner to the spindle 34 which, as has been discussed previously, supports the actuator pins 94 and 95 which, as the spindle is rotatably moved, interact with the sensors 102 and 104, respectively.

As shown in Fig. 4, the power unit 68 is controlled by a motor controller 120 which is coupled by leads 122, 124, and 126 to a latching relay 128. The relay 128 has a movable contact adapted to make contact with a stationary contact 132 terminating the lead 124 and to make contact with a stationary contact 134 terminating the lead 126. The internal coil of the relay 128 has one of its leads 136 connected to ground and the other lead 138 connected to the sensors 102 and 104.

When the motor controller 120 is energized, power is applied by the power unit to the spindle 34 to rotate it in a counterclockwise direction because of the contact established between the movable contact 130 and the lead 124. As the spindle 34 rotates in the counterclockwise direction, the actuator pin 94 will reach a position adjacent the sensor 102 which, at this time, will send a pulse to the relay 128 to unlatch the relay and cause the movable contact 130 to establish contact with the stationary contact 134, thereby latching the relay in a new position. When this happens, a signal is applied over the lead 126 to the motor controller 120 to change the direction of D.C. current applied to the power unit 68, thereby causing the power unit to reverse its rotational direction and apply a clockwise rotational movement to the spindle 34. As the spindle 34 moves in the clockwise direction, the actuator pin 95 will reach a position opposite the sensor 104 to trigger a pulse to unlatch the relay 128, causing thereby the movable contact 130 to establish contact with the lead 124, to thereby cause the motor controller 120 to reverse the D.C. current applied to the power unit 68 which, in turn, will reverse the rotational movement of the spindle 34.

As viewed in Fig. 1, the arcuate tool bit 30 preferably has a semi-circular shape and, therefore, the location of the actuator pins 94 and 95 should be adjusted to establish a semi-circular rotational movement of the spindle 34, by loosening the securing members 88 and 90 to adjust the positions of the actuator brackets 80 and 82 to establish the desired rotational range. Of course, it is apparent that the arcuate rotational range of movement of the spindle 34 can be adjusted to be less than 180°.

As shown in Fig. 2, as the tube 60 moves across a support 140 and enters into the interior of the spindle 34, the weld bead would be in the uppermost position of the tube 60 and would come in contact with the arcuate tool bit 30 as it oscillates to provide scarfing action to the tube 60 to remove the weld bead. Since the tool bit 30 oscillates back and forth, it provides not only a scarfing action, but also applies a polishing action to the tube 60 passing through the spindler 34. In the event that during this operation the tool bit 30 is damaged or becomes worn out, an operator of the scarfing apparatus 26 can momentarily shut down the motor controller 120 and operate the quick-release handle 64 to move the bearing block 36 upwardly, thereby moving the tool bit 30 out of contact with the tube 60. Thereafter, bolts 76 are loosened to permit the brackets 74 to release the defective tool bit 30. A new tool bit is then inserted into the seat 72 and the bolts are tightened to lock the new tool bit in position. Thereafter, the motor controller 120 is placed in operation and the quick-release handle 64 is operated to lower the bearing block 36 to re-establish contact between the new tool bit 30 and the tube 60 to continue with the weld bead removal.

During the short time required for the replacement of the defective tool bit, a portion of the tube 60 will pass through the spindle without having the weld bead removed from the tube. This short length of unscarfed tube can be processed by manual operation.

The motor controller 120 can be any one of such control apparatus commercially available, for example, a regenerated D.C. drive circuit, Mode SECO "6504-NO" manufactured by Seco Electronics Corporation of Lancaster, South Carolina. The power unit 68 includes a D.C. motor having a rating of one-third H.P. and a speed reducer having a speed reduction of 1.2 rpm to 35 rpm, both of the foregoing being commercially available.

As described, the oscillatory rotational movement imparted to the spindle 34 is provided by a control means comprising a motor controller 120 and co-acting means having two co-acting sets such as pins 94 and 95, and respective sensors 102 and 100.

Although there has been illustrated and described a preferred embodiment of the invention, it will be understood that changes in the construction and operation disclosed may be made without departing from the spirit of the invention or the scope of the appended claims.

**Claims**

1. In a scarfing apparatus for removing a weld bead from a tube being continuously formed by a tube forming machine, said apparatus including a hollow spindle, power means for applying a rotary motion to said spindle, a tool bit secured to said spindle and adapted to apply scarfing action to the weld bead as the tube moves through said hollow spindle, the improvement comprising control means coupled to said power means for imparting oscillatory rotational movement to said spindle.

2. The apparatus according to claim 1, said control means including means for reversing the polarity of electric current applied to said power means, actuator means for establishing the range of said oscillatory rotational movement, and sensor means co-acting with said actuator means, said actuator and sensor means defining a pair of co-acting members, whereby the relative movement between said actuator means and said sensor means initiates a signal to said polarity reversing means to change the rotational direction of said spindle.

3. The apparatus according to claim 2, including means for adjustably securing one of said co-acting members to establish the range of the rotational oscillatory motion.

4. The apparatus according to claim 3, wherein said means establish a range of movement not more than 90° in each oscillatory direction.

5. The apparatus according to claim 1, said control means including a motor controller coupled to said power means, and position sensing means coupled to said motor controller.

6. The apparatus according to claim 5, said position sensing means comprising a pair of position indicating members mounted on said spindle, and a pair of stationary sensing members mounted adjacent the spindle for co-action with said position indicating members, whereby the movement of one position indicating member adjacent one sensing member will generate a signal to initiate the reversing of the polarity of the current applied to the power means.

7. The apparatus according to claim 6, including a latching relay coupled between said set of stationary sensing members and said motor controller.

8. The apparatus according to claim 6, including bracket means for adjustably positioning said pair of position indicating members on said spindle and further bracket means for adjustably positioning said sensing members adjacent said spindle.

9. In a scarfing apparatus for removing a weld bead from a continuously formed tube, said apparatus including a hollow spindle power means for applying a rotary motion to said spindle and means for securing a tool bit so said spindle for applying scarfing action to the weld bead as the tube moves through said hollow spindle, the improvement comprising a tool bit having a curvilinear shape extending less than 180° about the circumference of said tube, and control means coupled to said power means for imparting oscillatory rotational movement to said spindle and said tool bit, whereby said tool bit scarfs the weld bead back and forth to remove the bead and polish the scarfed surface area.

10. The apparatus according to claim 9, said control means including means for reversing the polarity of electric current applied to said power means, and co-acting means having two co-acting sets, means for mounting one co-acting set on said spindle, and other means for mounting the other co-acting set adjacent said spindle, bracket means for mounting of said sets, whereby the relative movement between said two co-acting sets initiates a signal to said polarity reversing means to change the rotational direction of said spindle.

11. The apparatus according to claim 10, including adjusting means for adjustably securing at least one of said co-acting sets to establish the range of the rotational oscillatory motion.

12. The apparatus according to claim 11, wherein said bracket means establishes a range of movement not more than 180°.

13. The apparatus according to claim 9, said control means including a motor controller coupled to said power means, and position sensing means coupled to said motor controller.

14. The apparatus according to claim 13, said position sensing means comprising a pair of co-acting sets of members, one co-acting set of members being position indicating members, and the other co-acting set of members being position sensing members, bracket means for mounting one of said co-acting sets on said spindle and bracket means for mounting said other co-acting set in a stationary position adjacent said spindle, whereby the movement of the co-acting set of members mounted on the spindle with respect to the other co-acting set of members will generate a signal to reverse the polarity of current applied to the power means.

15. The apparatus according to claim 14, including a latching relay coupled between said stationary mounted co-acting set of members and said motor controller.

16. The apparatus according to claim 14, wherein said spindle mounting bracket means comprises a pair of arcuately-shaped brackets conforming arcuately to an end of said spindle, said position indicating member being in the form of a pin mounted on each of said brackets amid ends of said bracket and extending out wardly along the longitudinal axis of said spindle, each portion of the bracket between the pin and the end of the bracket defining an arcuate opening, and securing members passing through said arcuate openings for adjustably securing said brackets to the end of said spindle.

17. The apparatus according to claim 14, wherein said stationary mounting bracket means comprises a pair of brackets mounted on a housing of said apparatus adjacent to the end of said spindle, said brackets being positioned 90° with respect to each other, said position sensing members being in the form of proximity switches having ends disposed tangentially to the periphery of the rotating spindle.

18. A scarfing tool for removing a weld bead from a tubular member, a combination of a tool bit holder and a tool bit, said holder comprising a plate member having distal and frontal sides and provided with an opening for the passage of said tubular member through said holder, the distal side being adapted for securement to an end of a hollow spindle, said frontal side having an undercut portion extending across the width of said holder, the remaining portion of said holder defining an overhang, an arcuate seat formed in the central portion of the overhang and extending beyond each side of said opening, said tool bit having an arcuate shape complementarily fitted into said seat, and bracket members, one on each side of said opening, secured to said overhang and abutting ends of said tool bit.

19. The tool according to claim 18, wherein each bracket member includes a lip for abutting the respective end of said tool bit.

20. The tool according to claim 18, said frontal side having a peripheral shoulder, and a tool holder locking nut having a threaded surface for en gaging the end of said spindle, said nut having an interior shoulder for abutting said peripheral shoulder and securing said holder to said spindle.

_Fig-1-_

FIG_2

FIG_4

_FIG_3_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-3 755 884 (DUPY) <br> * claim 1 * | 1 | B 21 C 37/08 |
| D,A | US-A-1 973 877 (RICHARDS) <br> * claim 3 * | 1 | |
| D,A | US-A-1 954 511 (ADAMS) <br> * claims 1-4; figures 1,6 * | 1 | |
| X | US-A-2 608 138 (TENER) <br> * claims 1,2; figures 3,4 * | 1,9,18 | |
| A | US-A-2 602 378 (MORTON) <br> * claim 1; figure 7, positions 32,34 * | 1 | |
| | | | **TECHNICAL FIELDS SEARCHED (Int. Cl.4)** |
| A | EP-A-0 158 692 (OERLIKON) <br> * figure 1, claims 1,3 * | 1 | B 21 C 37/00 <br> B 23 D 79/02 |

The present search report has been drawn up for all claims

| Place of search | Date of completion of the search | Examiner |
|---|---|---|
| BERLIN | 09-02-1987 | SCHLAITZ J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82